# EUROPÄISCHE PATENTSCHRIFT

(11) **EP 3 797 271 B1**
(45) Veröffentlichungstag und Bekanntmachung des Hinweises auf die Patenterteilung: **04.12.2024**
(21) Anmeldenummer: 19729437.4
(22) Anmeldetag: 17.05.2019
(51) Int. Cl.: B25H 1/00, B62J 45/41, B62J 45/42, G01M 17/007, A63B 21/005, A63B 69/16

(54) **VORRICHTUNG ZUM ÜBERPRÜFEN UND ANPASSEN EINES FAHRRADES**
DEVICE FOR TESTING AND ADJUSTING A BICYCLE
DISPOSITIF POUR CONTRÔLER ET AJUSTER UNE BICYCLETTE

(30) Priorität: 23.05.2018 DE 102018004093
(43) Veröffentlichungstag der Anmeldung: 31.03.2021
(73) Patentinhaber: Hollenbacher, Jens, 40764 Langenfeld (DE)
(72) Erfinder: Hollenbacher, Jens, 40764 Langenfeld (DE)
(74) Vertreter: Cohausz Hannig Borkowski Wißgott
(86) Internationale Anmeldenummer: PCT/EP2019/000150
(87) Internationale Veröffentlichungsnummer: WO 2019/223895

(56) Entgegenhaltungen:
- WO-A1-2015/004454
- CN-B- 101 644 597
- CN-Y- 2 435 736
- DE-A1- 4 035 645
- JP-A- S5 832 126
- US-A1- 2007 142 177
- ANONYMOUS: "Investigating Weight Distribution on a Bicycle | Vernier", 27 March 2015 (2015-03-27), XP055627148, Retrieved from the Internet <URL:https://www.vernier.com/innovate/investigating-weight-distribution-on-a-bicycle/> [retrieved on 20190930]
- ANONYMOUS: "Frame fitting - weight distribution - Meriwether Cycles", 14 December 2012 (2012-12-14), XP055627184, Retrieved from the Internet <URL:https://meriwethercycles.com/2012/12/14/frame-fitting-weight-distribution/> [retrieved on 20190930]

## Beschreibung

Die Erfindung betrifft eine Vorrichtung zum Überprüfen und Anpassen eines Fahrrades an den Fahrer zum Erhalt einer optimalen statischen und/oder dynamischen Sitzposition des Fahrers auf dem Fahrrad, wobei die Vorrichtung mindestens zwei Abstützstellen aufweist zum Abstützen der Radachsen, der Radachsenbefestigungsstellen oder der Räder.

Es sind Vorrichtungen zum Überprüfen und Anpassen eines Fahrrades an den Fahrer bekannt, wie zum Beispiel die aus der US 7 976 433 B2 bekannte Bikefittiing-Maschine zeigt. Eine solche Vorrichtung ist technisch aufwändig und schwierig in der Handhabung.

Ferner ist es aus der Vernier "Investigating Weight Distribution on a Bicycle", March 27th, 2015 bekannt, die Gewichtsverteilung eines Rennrades zu untersuchen, das in einen stationären Trainer gestellt wurde, der auf zwei Kraftmessplatten steht. Hierbei werden die von beiden Rädern auf den Boden senkrecht ausgeübten Kräfte gemessen, während der Fahrer auf dem Rennrad sitzt. Querkräfte werden nicht erfasst. Dieses Dokument XP055627148 offenbart eine Vorrichtung gemäß dem Oberbegriff von Anspruch 1.

Aufgabe der Erfindung ist es, eine Vorrichtung der eingangs genannten Art so zu verbessern, dass bei einfacher Handhabung und Konstruktion ein exaktes Erfassen der optimalen Sitzposition und der optimalen Rahmengeometrie bei einfacher Handhabung und Konstruktion erreicht wird.

Diese Aufgabe wird erfindungsgemäß dadurch gelöst, dass das Kraft- oder Druckübertragungsmittel auf seiner Unterseite mindestens zwei vorzugsweise drei oder vier Stützstellen aufweist, die in einer waagerechten Ebene liegen und deren nach unten wirkender Druck jeweils durch einen Kraft- oder Drucksensor erfasst wird, wobei die Kraft- oder Drucksensoren von mindestens einer Kraft- oder Druckmessplatte (11) gebildet sind, auf der die Stützstellen (10) aufsitzen, wobei die Kraft- oder Druckmessplatte (11) in eine Vielzahl von Sensorflächenabschnitte aufgeteilt ist, die jeweils zumindest einen Kraft- oder Drucksensor aufweisen.

Eine solche Vorrichtung ist konstruktiv besonders einfach und kann leicht gehandhabt werden. Hierbei wird die optimale Sitzposition des Fahrers einschließlich des Fahrerschwerpunktes besonders exakt erfasst und eine genaue Rahmengeometrie und exakte Rahmenabmessungen sind erreichbar.

Eine hohe Anzahl besonders exakter Daten ist erreichbar, wenn die Kraft- oder Drucksensoren von mindestens einer Kraft- oder Druckmessplatte gebildet werden, auf der die Stützstellen aufsitzen. Hierzu ist besonders vorteilhaft, wenn die Kraft- oder Druckmessplatte in einer Vielzahl von Sensorflächenabschnitte aufgeteilt ist, die jeweils zumindest einen Kraft- oder Drucksensor aufweisen.

Erfindungsgemäß wird vorgeschlagen, dass jede Stützstelle einen Kraft- oder Drucksensor aufweist. Eine weitere Verbesserung der Konstruktion wird erreicht, wenn das Kraft- oder Druckübertragungsmittel eine waagerechte Platte aufweist, an deren äußeren Ecken jeweils eine Stützstelle angeordnet ist.

Die Vorrichtung kann die Werte an den Radachsen oder den Radachsen-Befestigungsstellen abnehmen. Eine besonders einfache Handhabung ist gegeben, wenn das Kraft- oder Druckübertragungsmittel an der unteren Auflagestelle des am Fahrrad montierten Rades starr befestigt ist.

Schräglagen und Steigungen lassen sich simulieren, wenn die Kraft- oder Druckmessplatte und/oder die Kraft- oder Druckübertragungsmittel in ihrer Neigung um eine oder zwei Achsen verstellbar sind. Positive und negative Beschleunigungen werden dadurch simuliert, dass die Kraft- oder Druckmessplatte und/oder die Kraft- oder Druckübertragungsmittel Beschleunigungsimpulsen ausgesetzt werden.

Wie weit die Pedale gleichmäßig belastet werden, wird dadurch erfasst, dass die Pedale Kraftaufnehmer insbesondere Drucksensoren aufweisen. Hierbei werden die Messergebnisse der Drucksensoren der Pedale mit den Sensoren der Messplatte abgeglichen. Hierbei können die Messergebnisse der Drucksensoren der Pedale mit den Ergebnissen der Sensoren der Druckmessplatte abgeglichen werden.

Vorzugsweise wird vorgeschlagen, dass die durch die Vorrichtung über das Fahrrad und/oder den Fahrer erhaltenen Informationen als Feedback an einen Trainer oder an den Fahrer insbesondere über ein Display übermittelt werden. Die Handhabung und Messsicherheit werden verbessert, wenn die durch die Vorrichtung über das Fahrrad und/oder den Fahrer erhaltenen Informationen ein automatisches Anpassen der Sitzposition, der Lenkerposition, der Achsabstände und/oder der Rahmenabmessungen erzeugt. Ferner wird vorgeschlagen, dass zur Aufnahme der Tretkräfte ein Lasterzeuger/Widerstandserzeuger in Form eines Dynamos oder einer elektrischen oder elektronischen Bremse angeordnet ist.

Eine weitere Verbesserung der Messgenauigkeit und das Erfassen der Haltung und der Bewegungen des Fahrers werden erreicht, wenn an dem Fahrer an zwei oder mehr Stellen Markerpunkte befestigt werden, deren Bewegungen während des Ermittelns der Sitz- und Rahmenwerte optisch erfasst und gleichzeitig und/oder nachträglich ausgewertet werden.

Ausführungsbeispiele der Erfindung sind in den Zeichnungen schematisch in Seitenansichten dargestellt und werden im Folgenden näher beschrieben. Es zeigen
- Fig. 1: eine Vorrichtung, bei der die Werte an den Radachsen oder den Radachsen-Befestigungsstellen abgenommen werden, und
- Fig. 2: eine Vorrichtung, bei der die Werte an der Unterseite der beiden Räder erfasst werden.

Das zu überprüfende Fahrrad weist einen Rahmen 1 auf, mit einem Sattel 2, einem Lenker 3 und zwei Radachsen 4, 5. Der auf dem Fahrrad sitzende Fahrer ist nicht dargestellt.

Beide Radachsen 4, 5 sind auf Abstützstellen 6, 7 gelagert, wobei dafür gesorgt ist, dass diese Abstützstellen alle auf die Radachsen wirkenden Kräfte übernehmen. Hierbei sind die Abstützstellen 6, 7 jeweils auf einem Druckübertragungsmittel 8, 9 starr befestigt, so dass alle erfassten Kräfte auf die Druckübertragungsmittel übertragen werden. Vorzugsweise besteht jedes Druckübertragungsmittel aus einer waagerechten Platte.

An der Unterseite jedes plattenförmigen Druckübertragungsmittels 8, 9 sind vier Stützstellen 10 befestigt, die entweder sich auf einen Kraft- oder Drucksensor abstützen oder selber Kraft- oder Drucksensoren darstellen oder sich auf einer Kraft- oder Druckmessplatte 11 abstützen.

Die Druckmessplatte 11 ist in eine Vielzahl von Sensorflächenabschnitten in Längs- und Querrichtung aufgeteilt, wobei die Sensorflächenabschnitte jeweils zumindest ein Kraftsensor oder Drucksensor aufweisen, der die auf den jeweiligen Sensorflächenabschnitt wirkende Kraft als ein elektrisches Signal ausgibt, das eine Rechnereinheit auswertet. Hierdurch wird ermöglicht, nicht nur besonders exakte Werte zu erhalten, sondern es werden auch eine Vielzahl verschiedener Druck- und Bewegungsrichtungen erfasst, die der Fahrer auf das Fahrrad ausübt. Hierbei werden die Messergebnisse der Drucksensoren der Pedale mit den Ergebnissen der Sensoren der Druckmessplatte 11 abgeglichen. Dabei werden die durch die Vorrichtung über das Fahrrad und/oder den Fahrer erhaltenen Informationen als Feedback an einen Trainer oder an den Fahrer insbesondere über ein Display übermittelt. Dies wird vorteilhafterweise auch dazu genutzt, dass die durch die Vorrichtung über das Fahrrad und/oder den Fahrer erhaltenen Informationen ein automatisches Anpassen der Sitzposition, der Lenkerposition, der Achsabstände und/oder der Rahmenabmessungen erzeugt.

Statt vier Stützstellen 10 können an der Unterseite des Druckübertragungsmittels 8, 9 auch zwei oder drei Stützstellen angeordnet sein. Ferner kann die Druckmessplatte in zwei Platten aufgeteilt sein, so dass beide Druckübertragungsmittel 8, 9 auf getrennten und synchronisierten Druckmessplatten stehen.

Die Kraft- oder Druckmessplatte 11 und/oder die Kraft- oder Druckübertragungsmittel 8, 9 sind in ihrer Neigung um eine oder zwei Achsen verstellbar. Hierdurch werden Schräglagen des Zweirades und Steigungen simuliert. Ferner werden die Kraft- oder Druckmessplatten 11 und/oder die Kraft-oder Druckübertragungsmittel 8, 9 positiven und negativen Beschleunigungen ausgesetzt, um ein Bremsen oder Beschleunigen zu simulieren. Ob die Pedale gleichmäßig belastet werden, wird durch Kraftaufnehmer/Drucksensoren in oder an den Pedalen erfasst.

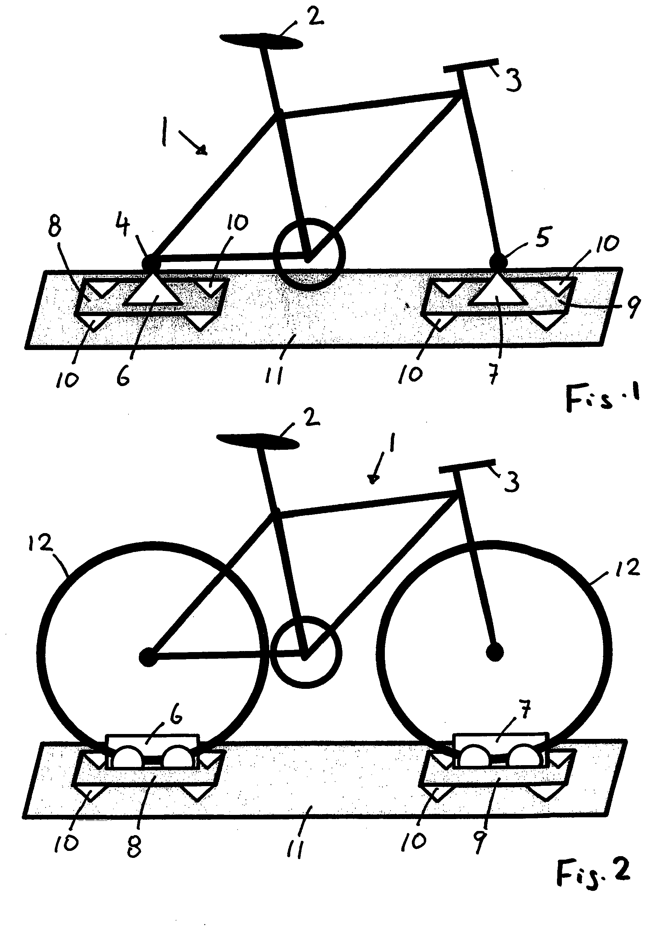

Die in Fig. 2 dargestellte Ausführung der erfindungsgemäßen Vorrichtung unterscheidet sich von der nach Fig. 1 im Wesentlichen nur dadurch, dass die Abstützstellen 6, 7 nicht mit den Radachsen 4, 5, sondern mit der jeweiligen Unterseite jeden Rades 12 des Fahrrades befestigt sind, so dass zum Überprüfen und Anpassen des Fahrrades es nicht erforderlich ist, die beiden Räder 12 zu demontieren.

Am Fahrradgestell und/oder an der darunter befindlichen Messvorrichtung ist ein Widerstandserzeuger insbesondere ein Dynamo oder eine elektrische Bremse angeordnet, gegen die der Fahrer antritt.

Sehr genaue und anschauliche Test- und Prüfungsergebnisse werden erreicht, wenn an dem Fahrer an zwei oder mehr Stellen Markerpunkte befestigt werden, deren Bewegungen während des Ermittelns der Sitz- und Rahmenwerte optisch oder elektronisch erfasst und gleichzeitig und/oder nachträglich ausgewertet werden.

### Bezugszeichenliste

- 1: Rahmen
- 2: Sattel
- 3: Lenker
- 4: Radachse
- 5: Radachse
- 6: Abstützstelle
- 7: Abstützstelle
- 8: Kraft- oder Druckübertragungsmittel
- 9: Kraft- oder Druckübertragungsmittel
- 10: Stützstellen
- 11: Kraft- oder Druckmessplatte
- 12: Rad

## Patentansprüche

1. Vorrichtung zum Überprüfen und Anpassen eines Fahrrades an den Fahrer zum Erhalt einer optimalen statischen und/oder dynamischen Sitzposition des Fahrers auf dem Fahrrad, wobei die Vorrichtung mindestens zwei Abstützstellen (6, 7) aufweist zum Abstützen der Radachsen (4, 5), der Radachsenbefestigungsstellen oder der Räder (12), wobei jede Abstützstelle (6, 7) ein Kraft- oder Druckübertragungsmittel (8, 9) aufweist, **dadurch gekennzeichnet, dass** das Kraft- oder Druckübertragungsmittel (8, 9) auf seiner Unterseite mindestens zwei Stützstellen, vorzugsweise drei oder vier Stützstellen (10) aufweist, die in einer waagerechten Ebene liegen und deren nach unten wirkender Druck jeweils durch einen Kraft- oder Drucksensor erfasst wird, wobei die Kraft- oder Drucksensoren von mindestens einer Kraft- oder Druckmessplatte (11) gebildet sind, auf der die Stützstellen (10) aufsitzen, wobei die Kraft- oder Druckmessplatte (11) in eine Vielzahl von Sensorflächenabschnitte aufgeteilt ist, die jeweils zumindest einen Kraft- oder Drucksensor aufweisen.

2. Vorrichtung nach einem der vorherigen Ansprüche, **dadurch gekennzeichnet, dass** das Kraft- oder Druckübertragungsmittel (8, 9) eine waagerechte Platte aufweist, an deren äußeren Ecken jeweils eine Stützstelle (10) angeordnet ist.

3. Vorrichtung nach einem der vorherigen Ansprüche, **dadurch gekennzeichnet, dass** das Kraft- oder Druckübertragungsmittel (8, 9) an der unteren Auflagestelle eines an einem Fahrrad montierten Rades (12) starr befestigbar ist.

4. Vorrichtung nach einem der vorherigen Ansprüche, **dadurch gekennzeichnet, dass** die Kraft- oder Druckmessplatte (11) und/oder die Kraft- oder Druckübertragungsmittel (8, 9) in ihrer Neigung um eine oder zwei Achsen verstellbar sind.

5. Vorrichtung nach einem der vorherigen Ansprüche, **dadurch gekennzeichnet, dass** die Kraft- oder Druckmessplatte (11) und/oder die Kraft- oder Druckübertragungsmittel (8, 9) Beschleunigungsimpulsen ausgesetzt werden.

6. Vorrichtung nach einem der vorherigen Ansprüche, **dadurch gekennzeichnet, dass** die durch die Vorrichtung über ein Fahrrad und/oder einen Fahrer erhaltenen Informationen als Feedback an einen Trainer oder an den Fahrer, insbesondere über ein Display, übermittelbar sind.

7. Vorrichtung nach einem der vorherigen Ansprüche, **dadurch gekennzeichnet, dass** mit den durch die Vorrichtung über ein Fahrrad und/oder einen Fahrer erhaltenen Informationen ein automatisches Anpassen der Sitzposition, der Lenkerposition, der Achsabstände und/oder der Rahmenabmessungen erzeugbar ist.

8. Vorrichtung nach einem der vorherigen Ansprüche, **dadurch gekennzeichnet, dass** zur Aufnahme der Tretkräfte ein Lasterzeuger/Widerstandserzeuger in Form eines Dynamos oder einer elektrischen oder elektronischen Bremse angeordnet ist.

## Claims

1. Device for testing and adjusting a bicycle to a rider in order to obtain an optimum static and/or dynamic seat position for the rider on the bicycle, wherein the device has at least two supporting points (6, 7) for supporting the wheel axles (4, 5), the wheel axle fastening points or the wheels (12), wherein each supporting point (6, 7) has a force- or pressure-transfer means (8, 9), **characterized in that** the force- or pressure-transfer means (8, 9) has on its underside at least two support points, preferably three or four support points (10), which lie in a horizontal plane and the downwardly directed pressure of which is in each case sensed by a force or pressure sensor, wherein the force or pressure sensors are formed by at least one force- or pressure-measuring plate (11), on which the support points (10) rest, wherein the force- or pressure-measuring plate (11) is divided into a multiplicity of sensor area portions, which each have at least one force or pressure sensor.

2. Device according to one of the preceding claims, **characterized in that** the force- or pressure-transfer means (8, 9) has a horizontal plate, at each of the outer corners of which a support point (10) is arranged.

3. Device according to one of the preceding claims, **characterized in that** the force- or pressure-transfer means (8, 9) can be rigidly fastened at the lower bearing point of a wheel (12) fitted on a bicycle.

4. Device according to one of the preceding claims, **characterized in that** the force- or pressure-measuring plate (11) and/or the force- or pressure-transfer means (8, 9) are adjustable in their inclination about one or two axes.

5. Device according to one of the preceding claims, **characterized in that** the force- or pressure-measuring plate (11) and/or the force- or pressure-transfer means (8, 9) are exposed to acceleration pulses.

6. Device according to one of the preceding claims, **characterized in that** the information obtained by the device concerning a bicycle and/or a rider can be transmitted as feedback to a trainer or to the rider, in particular by way of a display.

7. Device according to one of the preceding claims, **characterized in that** the information obtained by the device concerning a bicycle and/or a rider can be used to generate an automatic adjustment of the seat position, handlebar position, the wheelbases and/or the frame dimensions.

8. Device according to one of the preceding claims, **characterized in that** a load generator/resistance generator in the form of a dynamo or an electrical or electronic brake is provided for taking up the pedalling forces.

## Revendications

1. Dispositif de vérification et d'adaptation d'une bicyclette au cycliste en vue d'obtenir une position assise statique et/ou dynamique du cycliste sur la bicyclette, le dispositif possédant au moins deux points de soutien (6, 7) destinés à soutenir les axes de roue (4, 5), les points de fixation d'axe de roue ou les roues (12), chaque point de soutien (6, 7) possédant un moyen de transmission de force ou de pression (8, 9), **caractérisé en ce que** le moyen de transmission de force ou de pression (8, 9) possède, sur son côté inférieur, au moins deux points d'appui, de préférence trois ou quatre points d'appui (10), qui se trouvent dans un plan horizontal et dont la pression agissant vers le bas est respectivement captée par un capteur de force ou de pression, les capteurs de force ou de pression étant formés par au moins une plaque de mesure de force ou de pression (11) sur laquelle reposent les points d'appui (10), la plaque de mesure de force ou de pression (11) étant divisée en une pluralité de portions de surface de capteur qui présentent respectivement au moins un capteur de force ou de pression.

2. Dispositif selon l'une des revendications précédentes, **caractérisé en ce que** le moyen de transmission de force ou de pression (8, 9) possède une plaque horizontale sur laquelle sont disposés les coins extérieurs respectivement d'un point d'appui (10).

3. Dispositif selon l'une des revendications précédentes, **caractérisé en ce que** le moyen de transmission de force ou de pression (8, 9) peut être fixé de manière rigide au niveau du point de support bas d'une roue (12) montée sur une bicyclette.

4. Dispositif selon l'une des revendications précédentes, **caractérisé en ce que** la plaque de mesure de force ou de pression (11) et/ou le moyen de transmission de force ou de pression (8, 9) sont positionnables en leur inclinaison autour d'un ou deux axes.

5. Dispositif selon l'une des revendications précédentes, **caractérisé en ce que** la plaque de mesure de force ou de pression (11) et/ou le moyen de transmission de force ou de pression (8, 9) sont exposés à des impulsions d'accélération.

6. Dispositif selon l'une des revendications précédentes, **caractérisé en ce que** les informations à propos d'une bicyclette et/ou d'un cycliste obtenues par le dispositif peuvent être communiquées sous forme de retour d'information à un entraîneur ou au cycliste, notamment par le biais d'un dispositif d'affichage.

7. Dispositif selon l'une des revendications précédentes, **caractérisé en ce qu'**une adaptation automatique de la position assise, de la position du guidon, de l'écart entre les axes et/ou des dimensions du cadre peut être générée avec les informations à propos d'une bicyclette et/ou d'un cycliste obtenues par le dispositif.

8. Dispositif selon l'une des revendications précédentes, **caractérisé en ce qu'**un générateur de force / générateur de résistance sous la forme d'une dynamo ou d'un frein électrique ou électronique est monté en vue d'enregistrer les forces de pédalage.
